# EUROPÄISCHE PATENTANMELDUNG

(11) **EP 4 144 623 A1**
(43) Veröffentlichungstag der Anmeldung: **08.03.2023**
(21) Anmeldenummer: 22192981.3
(22) Anmeldetag: 30.08.2022
(51) Int. Cl.: B62J 1/16, B62D 63/08, B62J 1/28, B62K 7/00, B62K 27/00, B62K 27/10

(54) **SITZANORDNUNG**

(30) Priorität: 03.09.2021 DE 202021104743 U
(71) Anmelder: Croozer GmbH, 50354 Hürth (DE)
(72) Erfinder: GEHLEN, Andreas, 50829 Köln (DE)
(74) Vertreter: Lenzing Gerber Stute

(57) **Zusammenfassung**

Die vorliegende Erfindung betrifft eine Sitzanordnung für den Transport von Personen, insbesondere von Kindern, Kleinkindern und Babys, in einer Fahrgastzelle eines Fahrzeugs, insbesondere eines Fahrradanhängers oder eines Lastenfahrrads mit einem Ladebereich, in der mindestens ein Befestigungselement zum Befestigen der Sitzanordnung vorgesehen ist, mit einer ersten Stützfläche, insbesondere einer Rückenlehne, und einer dazu in einem Winkel angeordneten zweiten Stützfläche, insbesondere einer Sitzfläche, deren Winkel zueinander einstellbar ist. Die Erfindung betrifft auch einen Anhänger, insbesondere einen Anhänger für ein Fahrrad oder ein Pedelec, mit einer solchen Sitzanordnung, sowie ein Lastenfahrrad mit einem Ladebereich und einer darin verankerten Sitzanordnung.

Eine solche Sitzanordnung mit erhöhter Funktionalität ist gekennzeichnet durch ein an einem von einem Scheitelpunkt des Winkels beabstandeten Punkt an der ersten Stützfläche wirkendes Zugsystem zum Einstellen des Winkels zwischen der ersten und der zweiten Stützfläche (13, 14, 96, 99, 116, 117) mit mindestens einem an der ersten Stützfläche (13, 99, 116) befestigten flexiblen Zugelement, insbesondere einem Seil (25, 61, 102, 121), mit dem die erste Stützfläche (13, 99, 116) nach vorn bzw. oben und nach unten bzw. hinten gezogen und in mindestens zwei Positionen gehalten werden kann.

## Beschreibung

Die vorliegende Erfindung betrifft eine Sitzanordnung für den Transport von Personen, insbesondere von Kindern, Kleinkindern und Babys, in einer Fahrgastzelle eines Fahrzeugs, insbesondere eines Fahrradanhängers oder eines Lastenfahrrads mit einem Ladebereich, in der mindestens ein Befestigungselement zum Befestigen der Sitzanordnung vorgesehen ist, mit einer ersten Stützfläche, insbesondere einer Rückenlehne, und einer dazu in einem Winkel angeordneten zweiten Stützfläche, insbesondere einer Sitzfläche, deren Winkel zueinander einstellbar ist. Die Erfindung betrifft auch einen Anhänger, insbesondere einen Anhänger für ein Fahrrad oder ein Pedelec, mit einer solchen Sitzanordnung, sowie ein Lastenfahrrad mit einem Ladebereich und einer darin verankerten Sitzanordnung.

Fahrradanhänger, insbesondere solche für den Transport von Kindern, erfreuen sich zunehmender Beliebtheit. Es gibt Kinderfahrradanhänger, die ein Chassis und eine Fahrgastzelle aufweisen, in der je nach Größe des Anhängers ein Einzelsitz oder ein Doppelsitz zum Transport eines oder zweier Kinder vorgesehen ist. Das Chassis wird üblicherweise durch eine Rahmenkonstruktion gebildet, kann aber beispielsweise auch aus einer Wanne aus Kunststoff oder Aluminium bestehen. An das Chassis ist dann meist eine faltbare, die Fahrgastzelle bildende Rahmenkonstruktion montiert, wobei dann Fahrgastzelle bzw. Chassis und Fahrgastzelle von einem oder mehreren flexiblen Stoffen oder Folien umspannt sind. Die Sitze sind beispielsweise in der Fahrgastzelle verspannte Tuchsitze, oder sie sind als Schalensitze ausgebildet und seitlich in der Fahrgastzelle verankert. Ein Kinderfahrradanhänger mit verspanntem Tuchsitz ist beispielsweise in der EP 1 398 260 A2 offenbart. Allen Anhängern ist gemeinsam, dass sie vergleichsweise leicht gebaut sind und ein Verhältnis von aufnehmbarer Last zu Eigengewicht von deutlich mehr als 2 haben.

Es gibt auch Kinderfahrradanhänger mit Kindersitzen, deren Rückenlehne verstellbar ist. Ein einfaches Beispiel hierfür ist aus der deutschen Gebrauchsmusterschrift DE 92 15 797.1 bekannt. Darin ist ein Lastenanhänger mit einer Ladefläche sowie seitlichen, die Ladefläche eingrenzenden Wandungen offenbart. In den durch die Seitenwandungen gebildeten Ecken sind Verankerungen vorgesehen, in denen ein sogenannter Überrollbügel lösbar befestigt werden kann. Am Überrollbügel sind verschiedene Befestigungspunkte derart vorgesehen, dass ein Kindersitz in den Überrollbügel eingehängt werden kann, wobei die Position der Rückenlehne zur Sitzfläche des Kindersitzes einstellbar ist. Für den Transport von Babys, die in einer Liege-/Sitzposition transportiert werden müssen, sind die bekannten Sitze mit verstellbarer Rückenlehne jedoch nicht geeignet.

Darüber hinaus sind im Markt Fahrradanhänger der Marke Thule^{®} erhältlich, die eine in bestimmten Grenzen verstellbare Rückenlehne aufweisen. Dafür ist die Oberkante der Rückenlehne mit seitlichen Rahmenprofilen gekoppelt, die an der Fahrgastzelle verschiebbar gelagert und in verschiedenen Positionen feststellbar sind. Die Verstellung der Rückenlehne mit Rahmenprofilen ist konstruktiv vergleichsweise aufwändig. Außerdem ist der Winkelbereich, innerhalb dem die Rückenlehne verstellt werden kann, beschränkt.

Aus der EP 1 398 262 A2 ist eine von der Anmelderin entwickelte elastische Babyschale für den Transport von Babys bekannt. Sie besteht im Wesentlichen aus einer flexiblen Matte mit mindestens im Gesäßbereich eingenähten Seitenwandungen, die dreidimensional im Gestell eines Fahrradanhängers verspannt werden kann und so eine geeignete Form für den sicheren Transport eines Babys bildet. Die elastische Babyschale wird üblicherweise zusätzlich und oberhalb eines bereits im Fahrradanhänger befindlichen Kindersitzes eingesetzt.

Sitze für Fahrradanhänger, die für den Transport von Kindern, Kleinkindern und Babys verwendbar sind, sind bislang nicht bekannt.

Aufgabe der Erfindung ist es, die Funktionalität von Kindersitzen der eingangs genannten Art zu erhöhen.

Diese Aufgabe wird mit einer Sitzanordnung mit den Merkmalen des Anspruchs 1 gelöst durch ein Zugsystem mit mindestens einem an der ersten Stützfläche befestigten flexiblen Zugelement, insbesondere einem Seil, zum Einstellen des Winkels zwischen der ersten und der zweiten Stützfläche, mit dem die erste Stützfläche nach vorn bzw. oben und nach unten bzw. hinten gezogen und in mindestens zwei Positionen gehalten werden kann.

Unter einem flexiblen Zugelement wird hier und im Folgenden insbesondere ein Seil oder ein seilähnliches Element wie beispielsweise ein Riemen oder eine Kette verstanden, das vorzugsweise aus Textilfasern oder Kunststoff bestehen kann und mit dem Zugkräfte, wegen seiner Flexibilität aber keine Druckkräfte übertragen werden können.

Dabei werden Zugelemente sinnvollerweise, jedoch nicht zwingend, seitlich an der zu verstellenden Stützfläche angreifen. Weist die Sitzanordnung lediglich ein Zugelement auf, sollte die zu verstellende Stützfläche eine ausreichende Eigensteifigkeit aufweisen. Werden zwei oder mehr Zugelemente eingesetzt, die im Bereich der Ecken der zu verstellenden Stützfläche an dem Ende angreifen, das dem Scheitelpunkt des Winkels zwischen beiden Stützflächen abgewandt ist, kann die zu verstellende Stützfläche mithilfe der Zugelemente zwischen dem Scheitelpunkt des Winkels, den beide Stützflächen einschließen, und den Ecken verspannt werden, so dass die Stützfläche im Prinzip auch durch eine flexible Matte gebildet werden kann.

Das Zugsystem der erfindungsgemäßen Sitzanordnung ist ausgestaltet, die Stützfläche in mindestens zwei Positionen zu halten. Damit wird insbesondere beim Bremsen des Fahrzeugs erreicht, dass die Stützfläche entgegen der Trägheitskraft im Wesentlichen in ihrer Winkelposition verbleibt.

Die Stützfläche wird zum Einstellen des Winkels nach vorn bzw. oben und nach unten bzw. hinten gezogen, indem das Zugelement des Zugsystems derart an die Stützfläche angreift, dass es eine Zugkraft auf diese ausübt, die quer zu der Stützfläche gerichtet ist.

Der besondere Vorteil eines derartigen Zugsystems besteht darin, dass damit eine leichtgewichtige, einfach handhabbare, konstruktiv einfache und damit in der Herstellung günstige Möglichkeit bereitgestellt wird, den Winkel zwischen den Stützflächen der Sitzanordnung einzustellen. Außerdem ist es im Prinzip möglich, den Winkel der Stützflächen von 90° bis 180° stufenlos einzustellen, so dass insbesondere auch eine Liegesitzposition realisierbar ist, in der der Winkel zwischen den Stützflächen etwa 120° bis 150° beträgt.

In einer bevorzugten Ausführungsform der Erfindung ist das mindestens eine flexible Zugelement an mindestens einem Führungselement vor bzw. über der ersten Stützfläche und/oder an mindestens einem Führungselement hinter bzw. unter der ersten Stützfläche geführt. Führungselemente können beispielsweise Ösen oder Schienen oder andere Elemente sein, die an einem Rahmen- oder Trägerelement der Sitzanordnung vorgesehen sind und mit denen es möglich ist, Teile des mindestens einen Zugelements in einen Bereich zu führen, der für einen Benutzer gut zugänglich ist. Auch kann als Führungselement eine Kurvenführung vorgesehen sein, durch die das Zugelement im Bereich eines Befestigungspunktes, an dem es an der ersten Stützfläche befestigt ist, auf einer Kurve geführt ist, die der Bewegungskurve des Befestigungspunktes beim Einstellen des Winkels zwischen der ersten und der zweiten Stützfläche entspricht. Dadurch kann vermieden werden, dass sich eine Zugelementlose bildet, also ein Schlackern des Zugelements in nicht unter Zugspannung stehenden Bereichen vermieden wird. Vorzugsweise sind dabei Mittel zum Festsetzen des Zugelements an der Kurvenführung vorgesehen. Beispielsweise können an einem Seil oder Gurt als Zugelement ein oder mehrere Querstege und in der Kurvenführung entsprechend eine oder mehrere quer verlaufende Ausnehmungen zur Aufnahme der Querstege vorgesehen sein, wobei die Querstege dann in unterschiedlichen Positionen des Zugelements in die eine oder mehrere Ausnehmungen in der Kurvenführung eingesetzt werden können. In Ergänzung hierzu können zusätzlich Befestigungsmittel zum Halten der Querstege in den Ausnehmungen vorgesehen sein, beispielsweise ein Klettverschlussband, dass im Bereich eines in einer Aufnahme sitzenden Querstegs über das Zugelement gespannt wird, so dass der Quersteg nicht aus der Ausnehmung herausrutschen kann.

In einer weiteren bevorzugten Ausgestaltung der Erfindung ist das Zugelement endlos, oder seine Enden sind miteinander verbunden. In diesem Fall wird das Zugelement in einer umlaufenden Bahn geführt, wobei das Zugelement die Stützfläche bei einer Bewegung in die eine Richtung aufrichtet und bei einer Bewegung in die andere Richtung stärker neigt.

Um ein Zugelement in einer Position festzusetzen, kann es sinnvoll sein, Mittel zum Arretieren des mindestens einen Zugelements in einer Position vorzusehen, beispielsweise ein Klemmmittel wie vorzugsweise eine sogenannte Clamcleat. Ein solches Klemmmittel kann beispielsweise an einem Führungselement angeordnet sein.

Alternativ oder in Ergänzung hierzu kann in einer anderen bevorzugten Ausgestaltung der Erfindung ein zweiseitiger Steckverschluss verwendet werden, um das Zugelement in zwei Positionen arretieren zu können. Hierfür können an geeigneter Stelle am bzw. im Fahrzeug vorzugsweise zwei zueinander beabstandete Steckverschlusselemente vorgesehen sein, wobei dann ein zweiseitig wirkendes Gegenstück am Zugelement des Zugsystems angeordnet und zwischen den Steckverschlusselementen geführt wird, so dass wahlweise die eine Seite des Gegenstücks mit dem einen Steckverschlusselement oder die andere Seite des Gegenstücks mit dem anderen Steckverschlusselement zusammenwirken kann. Eine ähnliche Lösung kann mit zwei am Fahrzeug in einem Abstand zueinander angeordneten Magneten und einem dazwischen laufenden, an einem Zugelement befestigten Magneten realisiert werden.

Alternativ oder in Ergänzung dazu kann ein in entgegengesetzte Richtungen drehbarer Drehgriff vorgesehen sein, in dem ein Abschnitt des flexiblen Zugelement derart aufgenommen ist, dass beim Drehen des Drehgriffs in eine Richtung ein auf den Drehgriff zulaufender Teil des Zugelements aufgewickelt und ein vom Drehgriff abgehender Teil des Zugelements abgewickelt wird, wobei der Drehgriff vorzugsweise in mindestens zwei Positionen, die zwei Winkelpositionen zwischen der ersten und der zweiten Stützfläche entsprechen, verrastbar ist. Ein solcher Drehgriff kann beispielsweise an einem Rahmen des Fahrzeugs bzw. der Zugeinrichtung in einem Bereich oberhalb des oberen Endes der ersten Stützfläche horizontal und quer zur Längsrichtung des Fahrzeugs angeordnet sein. Der Drehgriff kann beispielsweise einen entgegen einer Federkraft lösbaren Verrastungsmechanismus aufweisen derart, dass der Drehgriff über die Verrastung in mindestens zwei, vorzugsweise in mehr als zwei, beispielsweise in zwischen 5 und 8 verschiedene Winkelpositionen für die Stützfläche verrastet werden kann. Der Drehgriff kann beispielsweise mit einer Hülse ausgebildet sein, an der das flexible Zugelement befestigt und mit mehreren gleichgerichteten Wicklungen aufgewickelt ist, die durch Drehen des Drehgriffs in eine Richtung abgewickelt werden, während gleichzeitig ein zulaufender Teil des Zugelements auf die Hülse aufgewickelt wird.

Die erfindungsgemäße Sitzanordnung kann darüber hinaus mit einem Zugsystem für die zweite Stützfläche ausgestattet sein. Damit ist es nicht nur möglich, die Neigung beider Stützflächen der Sitzanordnung individuell einzustellen, sondern im Prinzip auch, die Sitzrichtung umzudrehen, indem nämlich die Stützfläche, die ursprünglich als Sitzfläche eingerichtet war, zu einer Rückenlehne aufzurichten, und die Stützfläche, die als Rückenlehne eingerichtet war, zu einer Sitzfläche abzusenken.

Vorzugsweise kann das mindestens eine Führungselement, das vor oder oberhalb der ersten Stützfläche angeordnet ist, an einem Träger, insbesondere an einem Gurt, ausgebildet sein, an dem mindestens die erste Stützfläche, vorzugsweise beide Stützflächen, zumindest teilweise aufgehängt sind. Alternativ hierzu reicht es beispielsweise aus, wenn eine oberhalb der ersten Stützfläche quer zur Ausrichtung der Sitzanordnung verlaufende Strebe als Führungselement vorgesehen ist, die vorzugsweise Bestandteil einer Rahmenkonstruktion für die Fahrgastzelle sein kann. An einer solchen Querstrebe können zum Beispiel ein zentrales und/oder zwei zu beiden Seiten der Stützfläche angeordnete Zugelemente geführt bzw. umgelenkt sein, die mit der ersten Stützfläche zusammenwirken. Bei einer weiteren Alternative können oberhalb beider Seiten der Sitzanordnung in Längsrichtung des Fahrzeugs verlaufende Träger, insbesondere Gurte, vorgesehen sein, an denen die Sitzanordnung einschließlich ihrer Stützflächen aufgehängt ist. In beiden Fällen ist das Zugsystem Bestandteil der Aufhängung der Stützflächen an dem oder den Trägern.

In noch einer bevorzugten Ausführungsform weist die erfindungsgemäße Sitzanordnung zwischen der ersten und gegebenenfalls auch der zweiten Stützfläche und dem Träger eine seitliche Wandung auf, die elastisch oder faltbar ist und mit der ein Herausrutschen der zu transportierenden Person aus der Sitzanordnung verhindert wird. Auch kann mit einer seitlichen Wandung eine maximale Neigung der Stützfläche begrenzt werden, wobei sich die Seitenwandung zusammenfaltet oder zusammenzieht, wenn die Stützfläche in einer aufrechteren Position angeordnet ist.

Im Ergebnis wird ein einfaches Mittel bereitgestellt, um die Position der Stützflächen zueinander zu verändern.

Die oben beschriebenen erfindungsgemäßen Sitzanordnungen eignen sich insbesondere für Anhänger für Fahrräder und Pedelecs, ebenso wie zum Einsatz in dem Ladebereich eines Lastenfahrrads.

Im Folgenden wird die Erfindung anhand von Figuren, in denen bevorzugte Ausführungsbeispiele der Erfindung dargestellt sind, näher erläutert.

Es zeigen
- Fig. 1: eine Skizze mit einem in Teilen dargestellten Fahrradanhänger und einer darin eingespannten Sitzanordnung in perspektivischer Ansicht;
- Fig. 2: eine Skizze der Sitzanordnung des in Figur 1 dargestellten Fahrradanhängers in Aufsicht mit Teilen einer ersten Ausführungsform eines erfindungsgemäßen Zugsystems;
- Fig. 3: eine Skizze des in Figur 1 dargestellten Fahrradanhängers samt Sitzanordnung mit dem erfindungsgemäßen Zugsystem in Seitenansicht, wobei die erste Stützfläche der Sitzanordnung durch das Zugsystem in einer ersten Position gehalten ist;
- Fig. 4: eine Skizze des in Figur 3 dargestellten Fahrradanhängers, wobei die erste Stützfläche der Sitzanordnung in einer Übergangsposition zwischen der ersten und einer zweiten Position ist;
- Fig. 5: eine Skizze des in Figur 3 dargestellten Fahrradanhängers, wobei die erste Stützfläche der Sitzanordnung durch das Zugsystem in der zweiten Position gehalten ist;
- Fig. 6: eine Skizze des in Figur 1 dargestellten Fahrradanhängers samt Sitzanordnung mit einer zweiten Ausführungsform des erfindungsgemäßen Zugsystems in Seitenansicht, wobei die erste Stützfläche der Sitzanordnung durch das Zugsystem in der ersten Position gehalten ist;
- Fig. 7: eine Skizze des in Figur 5 dargestellten Fahrradanhängers in Seitenansicht, wobei die erste Stützfläche der Sitzanordnung durch das Zugsystem in der zweiten Position gehalten ist;
- Fig. 8: eine Skizze eines anderen, in Teilen dargestellten Fahrradanhängers samt Sitzanordnung mit einer weiteren Ausführungsform des erfindungsgemäßen Zugsystems in Seitenansicht, wobei die erste Stützfläche der Sitzanordnung durch das Zugsystem in der zweiten Position gehalten ist;
- Fig. 9: eine Skizze noch eines anderen, in Teilen dargestellten Fahrradanhängers samt Sitzanordnung mit einer weiteren Ausführungsform des erfindungsgemäßen Zugsystems in Seitenansicht, wobei die erste Stützfläche der Sitzanordnung durch das Zugsystem in einer ersten Position gehalten ist; und
- Fig. 10: eine Skizze des in Figur 9 dargestellten Fahrradanhängers in Seitenansicht, wobei die erste Stützfläche der Sitzanordnung durch das Zugsystem in einer zweiten Position gehalten ist.

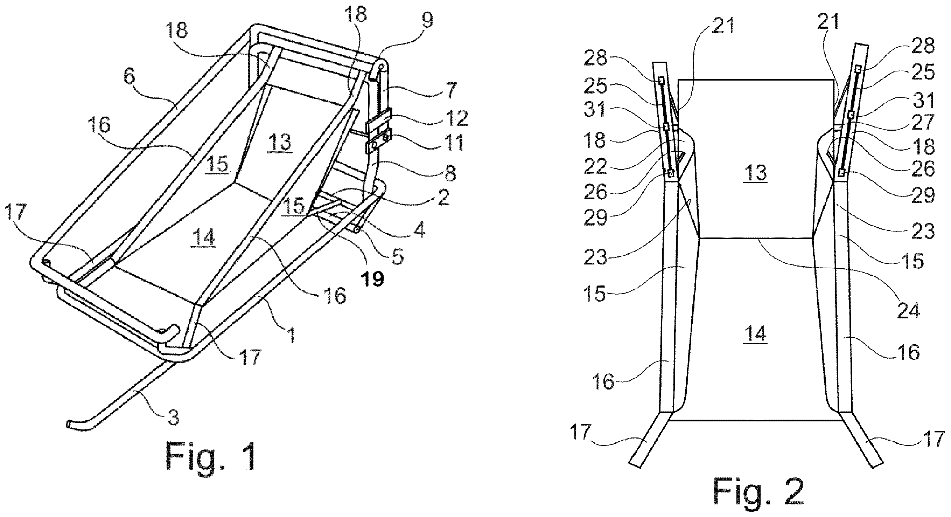

Figur 1 zeigt einen Anhänger mit einem Chassis mit einem Basisrahmen 1, der durch mindestens eine Querstrebe 2 ausgesteift ist und in Fahrtrichtung vorn eine Deichsel 3 und in Fahrtrichtung hinten eine schwenkbare Achse 4 mit Radaufnahmen 5 an beiden ihrer Enden trägt. Vorn und hinten am Fahrgestellrahmen 1 ist eine faltbare Fahrgastzelle mit einem vorderen Rahmenabschnitt 6 und einem oberen hinteren Rahmenabschnitt 7 und einem unteren hinteren Rahmenabschnitt 8 befestigt, die über Gelenke 9, 11 miteinander verbunden sind. In aufgeklapptem Zustand der Fahrgastzelle sind die Rahmenabschnitte 6, 7, 8 über Klemmbackenverschlüsse 12, mit denen der untere und der obere hintere Rahmenabschnitt 7, 8 fest verbindbar sind, in ihrer Position zueinander feststellbar.

In der Fahrgastzelle ist eine Sitzanordnung mit einer ersten Stützfläche 13, hier die Rückenlehne, und einer zweiten Stützfläche 14, hier die Sitzfläche, sowie mit seitlichen Wandungen 15 angeordnet, an deren Oberkante in einer Längsrichtung des Fahrradanhängers seitliche Gurte 16 verlaufen. Die Sitzanordnung ist durch vordere Gurte 17, die zwischen der Vorderseite der Sitzanordnung und dem vorderen Teil des Fahrgestellrahmens 1 verlaufen, durch obere Gurte 18, die zwischen den oberen, hinteren Enden der seitlichen Wandungen 15 und einer oberen Querstrebe des unteren hinteren Rahmenabschnitts 7 verlaufen, und Gurte 19, die zwischen dem Scheitelpunkt zwischen den beiden Stützflächen 13, 14 und der Querstrebe 2 verlaufen, in der Fahrgastzelle gehalten bzw. verspannt. Alternativ zur Verwendung der Gurte 17 und/oder 18 kann der seitliche Gurt 16 direkt mit dem vorderen Teil des Chassis 1 und/oder der oberen Querstrebe des oberen hinteren Rahmenteils 7 verbunden sein.

In Figur 2 ist die Sitzanordnung des in Figur 1 dargestellten Fahrradanhängers in einer Ansicht von oben skizziert. Es ist hier verdeutlicht, dass die Seitenkanten 21 der ersten Stützfläche 13 jeweils über ein in Falten bzw. in eine Kellerfalte gelegtes Tuchmaterial 22 mit den Hinterkanten 23 der seitlichen Wandungen 15 verbunden sind, so dass die Stützfläche um die Verbindungskante 24 zwischen erster Stützfläche 13 und zweiter Stützfläche 14 so weit schwenkbar ist, bis das Tuchmaterial 22 gespannt ist.

Die Position der ersten Stützfläche wird über ein Zugsystem eingestellt. Zum Zugsystem gehören ein endloses Seil 25 auf jeder Seite der Sitzanordnung. Jedes der beiden umlaufenden Seile ist an einem Befestigungspunkt 26 seitlich in einem oberen Bereich der Stützfläche 13 durch diese hindurchgeführt und an ihr befestigt. Auf der Rückseite der Stützfläche 13 läuft das umlaufende Seil 25 über eine Umlenkung, die hier durch eine an dem unteren, hinteren Rahmenteil 7 vorgesehene Querstrebe 27 gebildet wird, und von dort weiter zu einem oberen Bereich des Gurtes 18, wo es durch eine Öse zur Oberseite des Gurtes hindurchtritt. Das Seil 25 läuft dann an der Oberseite des Gurtes 18 entlang bis zu einer unteren, ebenso wenig dargestellten Öse, wo es wieder durch den Gurt 18 hindurchtritt und zum Befestigungspunkt 26 verläuft. Im Bereich der oberen und der unteren Ösen jedes der Gurte 18 sind Steckkupplungselemente 28, 29 vorgesehen, die mit dem Gurt 18 jeweils ortsfest verbunden sind. Die Steckkupplungselemente 28, 29 wirken mit einem mit dem Seil 25 fest verbundenen Kupplungsgegenstück 31 zusammen, das zwischen den beiden Steckkupplungselementen 28, 29 läuft und mit jedem der beiden Steckkupplungselemente 28, 29 fest verbunden werden kann. Hier dienen die Ösen und der Gurt 18 als Führungselemente für das Seil. Sie ermöglichen einen leichten Zugriff auf das Zugsystem von oben und damit eine einfache Bedienung.

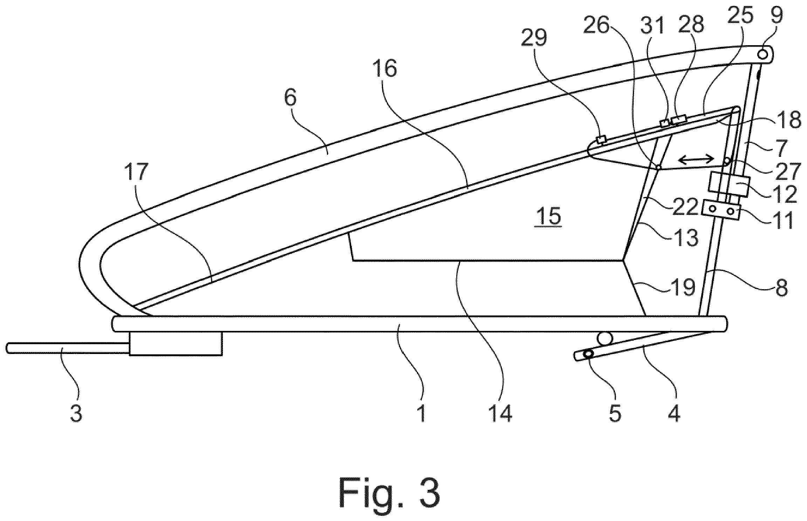

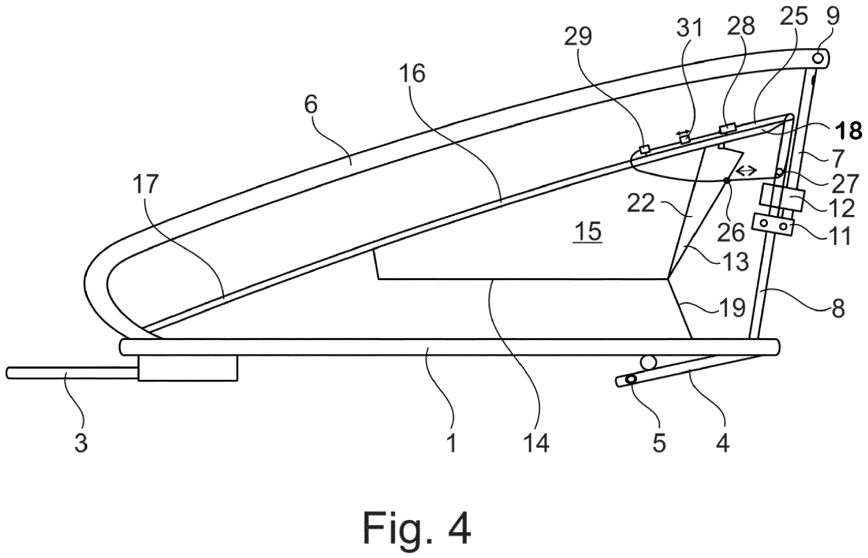

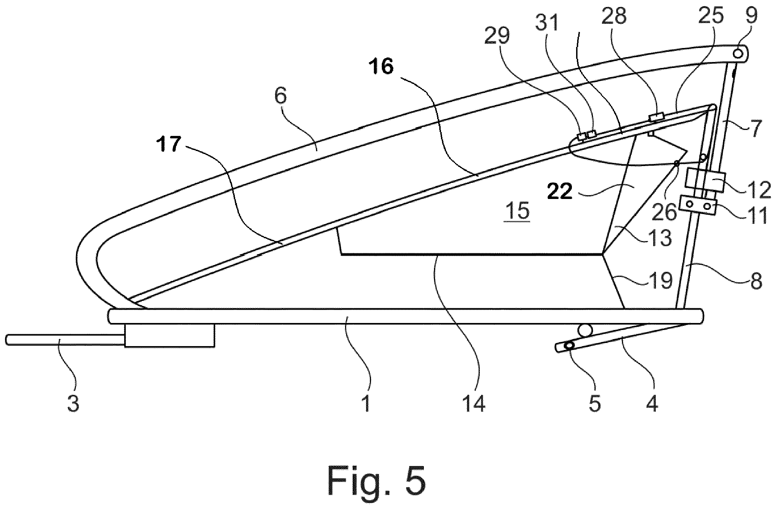

Wie insbesondere in den Figuren 3 bis 5 zu sehen ist, in denen der Fahrradanhänger und Sitzanordnung der Figuren 2 und 3 in Seitenansicht skizziert sind, lässt sich die erste Stützfläche 13 mit dem Zugsystem in zwei Positionen arretieren. In einer ersten, in Figur 3 gezeigten Endposition ist die Stützfläche 13 in einer aufrechteren Position. In dieser Position wirkt das Kupplungsgegenstück 31 mit der den oberen Steckkupplung 28 zusammen, so dass die erste Stützfläche 13 in dieser Position fest gehalten ist. In Figur 4 ist die erste Stützfläche 13 in einer Position auf dem Weg von der ersten in eine zweite Endposition, das Kupplungsgegenstück 31 befindet sich zwischen den beiden Steckkupplungselementen 28 und 29. In Figur 5 ist die erste Stützfläche 13 dann in einer nach hinten gekippten Position arretiert, wobei das Kupplungsgegenstück 31 dann mit dem unteren Steckkupplungselement 29 zusammenwirkt.

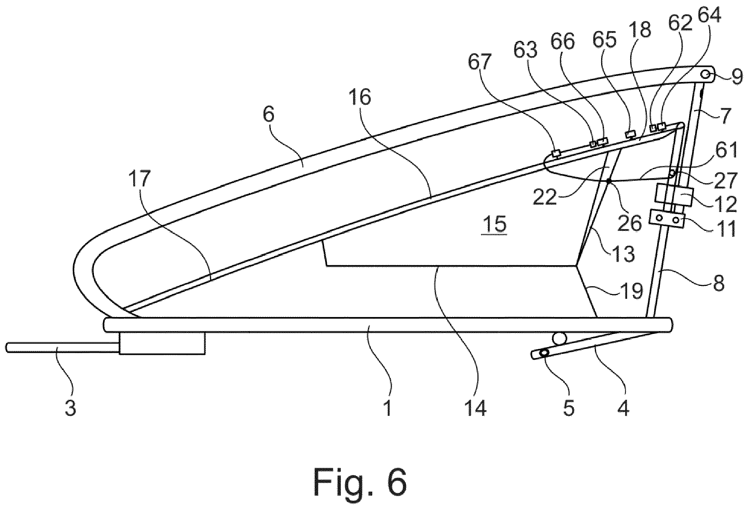

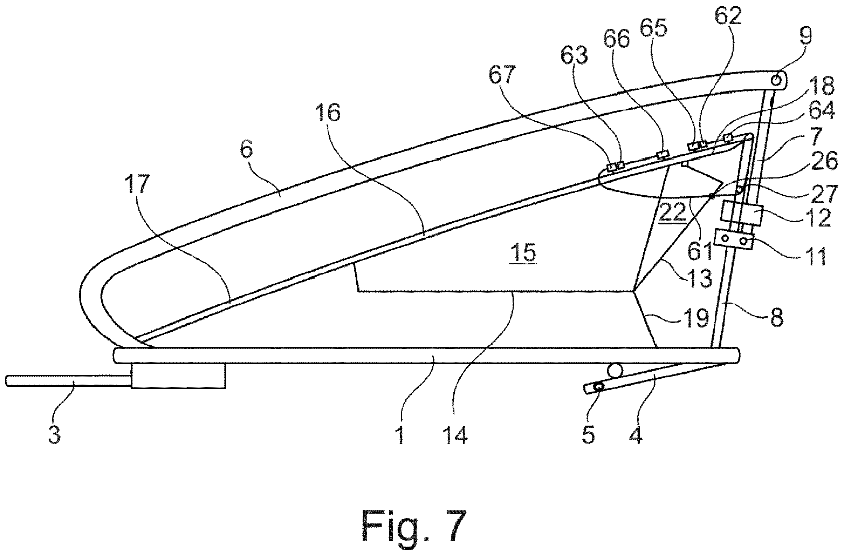

In den Figuren 6 und 7 ist der gleiche Fahrradanhänger wie in den vorherigen Figuren gezeigt, allerdings mit einem etwas anderen Zugsystem. Das Zugsystem unterscheidet sich im Wesentlichen durch das Seil 61, das hier nicht endlos aber im Wesentlichen genauso geführt ist, wie das in den Figuren 2 bis 5 gezeigte endlose Seil 25. An den Enden des Seils 61 sind Kupplungselemente 62, 63 angeordnet, die zu beiden Seiten der Sitzanordnung oberhalb des Gurtes 16 und des sich daran anschließenden Gurtes 18 mit dort paarweise im Abstand zueinander angeordneten Kupplungselementen 64, 65 und 66, 67 zusammenwirken. Dabei können die Kupplungselemente 62 und 64 sowie 63 und 66 miteinander gekoppelt werden, um die erste Stützfläche 13 in einer aufrechteren Position zu halten, und es können die Kupplungselemente 62 und 65 sowie 63 und 67 zusammenwirken, um die erste Stützfläche 13 in einer zweiten, geneigteren Position zu halten.

Alternativ ist es sowohl in der Ausführungsform der Figuren 2 bis 5 als auch in der Ausführungsform der Figuren 6 und 7 möglich, anstelle von zusammenwirkenden Kupplungselementen Klemmen für Seile einzusetzen, wie sie beispielsweise von Segelbooten (z.B. eine Clamcleat) bekannt sind, wobei bei einem Zugsystem mit endlosem Seil im Prinzip eine Klemme ausreicht, die beispielsweise auf der Oberseite des Gurtes 16 oder des Gurtes 18 angeordnet sein kann, um das Seil festzusetzen und die erste Stützfläche in ihrer Position zu halten. Für ein Seil mit offenen Enden wären mindestens zwei Klemmen zu beiden Seiten des Befestigungspunkts 26 notwendig, um die erste Stützfläche in ihrer Position zu halten. Der besondere Vorteil des Einsatzes von Klemmen anstelle von (Steck-) Kupplungen ist, dass die Position der Stützfläche stufenlos verstellbar ist.

Die erste Stützfläche 13 ist vorzugsweise ausreichend ausgesteift, so dass sie den abzustützenden Körper ausreichend stützt und ihre Breite im Wesentlichen beibehält. Das ist insbesondere dann von Vorteil, wenn das Zugsystem im Wesentlichen nur vertikale Kräfte aufnimmt. Nimmt das Zugsystem aber auch Querkräfte in der Art auf, dass es die Stützfläche in einer Richtung quer zur Fahrtrichtung verspannt, kann es ausreichen, wenn die Stützfläche aus einem flexiblen Material gebildet wird.

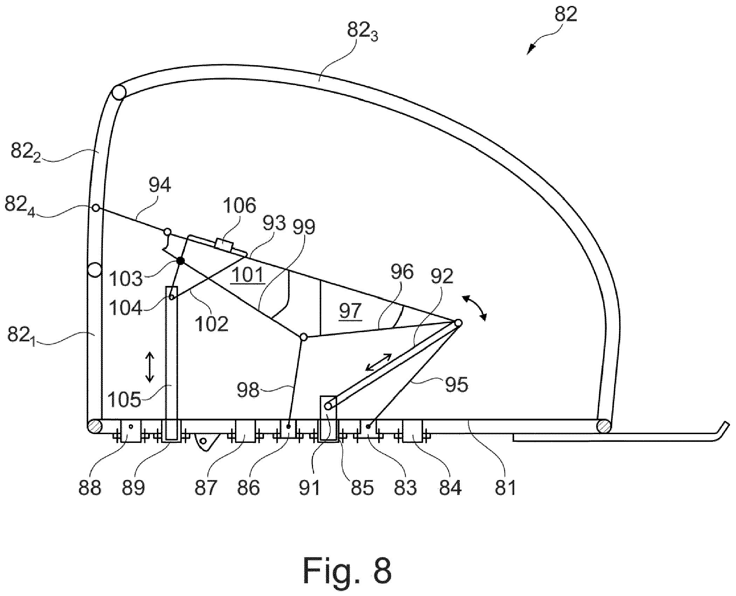

In Figur 8 ist eine weitere Ausführungsform der erfindungsgemäßen Sitzanordnung dargestellt, in der das Zugsystem mit einer Klemme für ein Seil ausgestattet ist. Figur 8 zeigt einen Fahrradanhänger mit einem Chassis 81 und einer darauf aufgesetzten, faltbaren Fahrgastzelle 82. Die Fahrgastzelle 82 weist zwei hintere Rahmenelemente 82₁ und 82₂ sowie ein die Fahrgastzelle vorn und oben begrenzendes Rahmenelement 82₃ auf. Das Chassis 81 weist in den Boden eingelassene, in Fahrtrichtung quer nebeneinander in Reihen angeordnete, Chassis-seitige Kupplungselemente sowie ebenso nebeneinander in Reihen angeordnete quadratische Hülsen mit Quersteg auf, mit einer vorderen Reihe quadratischer Hülsen 83 zwischen der ersten und der zweiten Reihe Chassis-seitiger Kupplungselemente 84, 85, einer mittleren Reihe quadratischer Hülsen 86 zwischen der zweiten und der dritten Reihe Chassis-seitiger Kupplungselemente 85, 87 und einer letzten Reihe quadratischer Hülsen 88 hinter der letzten Reihe Chassis-seitiger Kupplungselemente 89. In zwei der Chassis-seitigen Kupplungselemente 85 der zweiten Reihe sind zwei niedrige Pfosten 91 eingesetzt. Die Pfosten 91 weisen an ihrem unteren Ende einen hier nicht dargestellten, mit dem Chassis-seitigen Kupplungselement 85 als Funktionsmodul-seitiges Kupplungselement zusammenwirkenden, lösbaren Schnellverschluss auf. Beide Pfosten 91 tragen einen U-förmigen Bügel 92, der an den Pfosten 91 um eine Achse quer zur Fahrtrichtung verschwenkbar ist. Die freien Enden des U-förmigen Bügels 92 sind teleskopierbar.

Die Pfosten 91 und der Bügel 92 sind Bestandteil einer erfindungsgemäßen Sitzanordnung zum Transport eines Kindes oder eines Babys. Am Bügel 92 sind zwei obere Gurte 93 angeordnet, die an beiden Seiten der Sitzanordnung verlaufen und über Gurte 94 an einer im hinteren Rahmenelement 82₂ quer verlaufenden Strebe 82₄ verspannt sind. Das vordere Ende des Bügels 92 ist durch einen Gurt 95, der an einer Quersteg in einer der quadratischen Hülse 83 gegengelagert ist, nach unten verspannt. Außerdem ist am Bügel 92 das vordere Ende einer die Sitzfläche bildenden Stützfläche 96 befestigt. Die Stützfläche 96 ist über seitliche Wandungen 97 an den Gurten 93 abgehängt und an ihrer in Fahrtrichtung rückwärtiger Kante durch einen Gurt 98, der an einem Steg in der quadratischen Hülse 86 gegengelagert ist, nach unten abgespannt. An der hinteren Kante der Stützfläche 96 schließt sich eine weitere, hier die Rückenlehne bildende Stützfläche 99 an. Es sind flexible seitliche Wandungen 101 zwischen der Stützfläche 99 und den oberen Gurten 93 vorgesehen.

Die erfindungsgemäße Sitzanordnung weist ein Zugsystem mit jeweils einem endlosen Seil 102 auf beiden Seiten der Sitzanordnung auf. Das Seil 102 ist an einem Befestigungspunkt 103 fest mit der Stützfläche 99 verbunden. Jedes der Seile 102 ist von dem Befestigungspunkt aus gesehen durch eine nicht dargestellte Öse im Bereich des oberen Endes des Gurts 93 hindurch geführt, läuft an der Oberseite des Gurts 93 in Richtung zur Vorderkante des Bügels 92, dann durch eine nicht dargestellte Öse wieder durch den Gurt 93 hindurch bis zu einem Umlenkpunkt 104 auf der Rückseite der Stützfläche 99 und von dort wieder zum Befestigungspunkt 103. Auch hier dienen die Ösen und der Gurt 93 als Führungselemente, mit denen das Seil 102 in einem für einen Benutzer gut zugänglichen Bereich geführt ist. Der Umlenkpunkt 104, der beispielsweise durch eine Umlenkrolle gebildet sein kann, ist am oberen Ende eines Pfostens 105 angeordnet, der in dem Chassis-seitigen Kupplungselement 89 angeordnet ist. Der Pfosten kann höhenverstellbar ausgebildet sein.

An der Oberseite des Gurtes 93 ist das Seil 102 durch eine Klemme 106, beispielsweise eine Clamcleat, geführt, in der das Seil arretiert werden kann. Somit kann die Stützfläche 99 durch Verschieben des Seils 102 aufrechter gestellt oder flacher geneigt werden und in einer gewünschten Position durch Festsetzen des Seils 102 in der Klemme 106 gehalten werden.

Offensichtlich ist es möglich, durch eine entsprechende Anordnung und Länge des Seils oder anderer Zugmittel den Winkel einer Stützflächen über einen weiten Winkelbereich zu variieren, von einer im Wesentlichen senkrechten Position bis hin zu einer im Wesentlichen horizontalen Position.

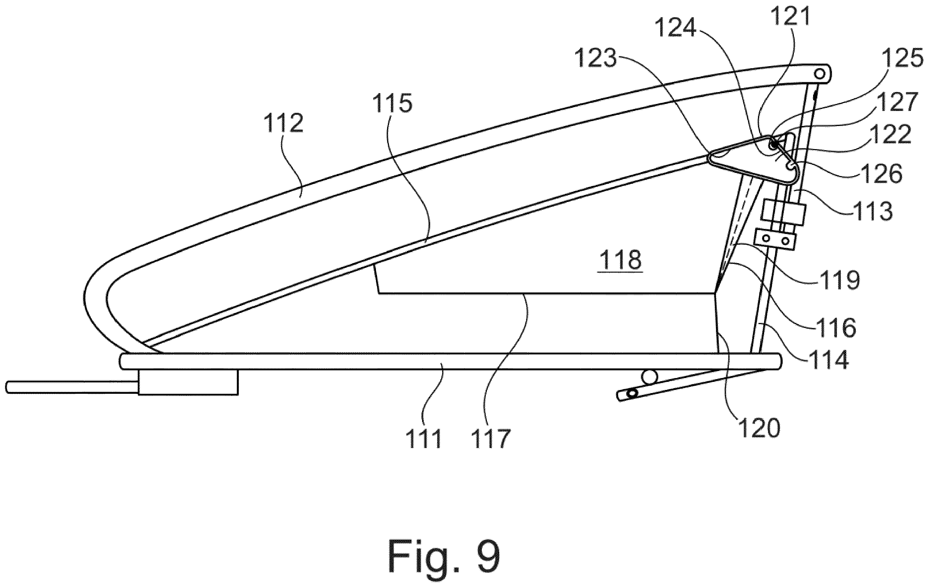

Der in Figur 9 dargestellte Fahrradanhängerrahmen weist ein in Teilen dargestelltes Chassis mit einem Basisrahmen 111, einem vorderen Rahmenabschnitt 112, einem oberen hinteren Rahmenabschnitt 113 und einem unteren hinteren Abschnitt 114 auf. Zwischen einem in Fahrtrichtung vorderen Teil des Basisrahmens 111 und einem oberen Teil des oberen hinteren Rahmenabschnitts 113 sind seitliche Gurte 115 gespannt, die als Träger für eine Sitzanordnung mit einer ersten, eine Rückenlehne bildenden Stützfläche 116, einer zweiten, eine Sitzfläche bildenden Stützfläche 117 und seitlichen Wandungen 118. Die Rückenlehne ist an jeder Seite über eine Kellerfalte 119 mit den seitlichen Wandungen 118 verbunden. Rückenlehne und Hinterkante der Sitzfläche sind über Gurte 120 nach unten am Basisrahmen 111 abgespannt. Der Winkel der Rückenlehne ist um die Hinterkante der Sitzfläche herum verschwenk- und einstellbar.

An ihrer Oberseite ist die Rückenlehne an beiden Seiten mit als Zugelemente dienenden, umlaufenden Riemen 121 verbunden. Jeder der Riemen 121 ist an der umlaufenden Kante einer Kurvenscheibe 122 geführt, die einem Dreieck mit stark abgerundeten Ecken gleicht. Jede der Kurvenscheiben 122 ist am oberen hinteren Rahmenteil 113 befestigt und verläuft mit ihrer vorderen Stirnseite 123 parallel zu den seitlichen Gurten 115. Die hinteren Stirnseiten 124 der Kurvenscheiben weisen einen Krümmungsradius auf, der dem Schwenkradius der Befestigungspunkte des Riemens an der Oberkante der Rückenlehne entspricht. In die hintere Stirnseite 124 sind jeweils (mindestens) zwei Ausnehmungen 125, 126 eingelassen, die mit jeweils einem an den Riemen 121 ausgebildeten Querstegen 127 zusammenwirken, um die Rückenlehne in einer Winkelposition zu halten. Die Querstege 127 der Riemen 121 können auch als eine durchlaufende Querstange an der Oberkante der Rückenlehne ausgebildet sein.

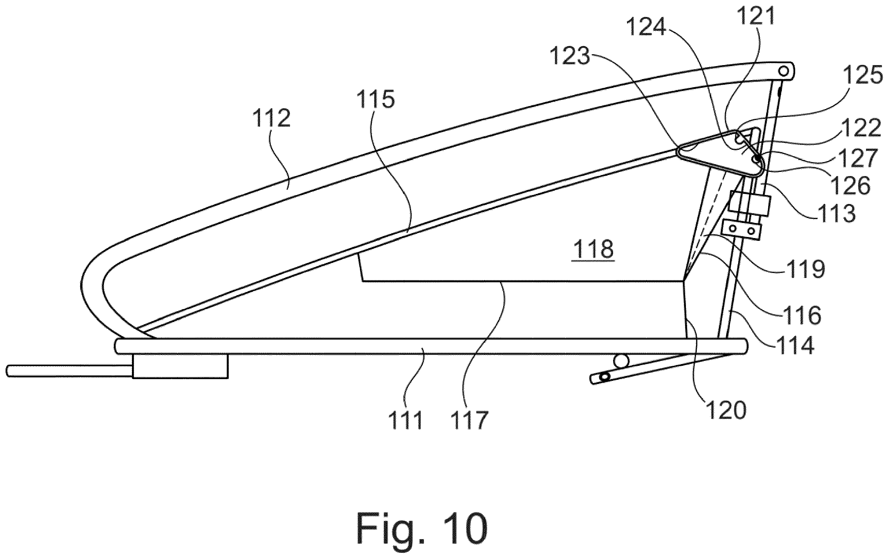

Figur 10 zeigt den Fahrradanhängerrahmen samt Sitzanordnung der Figur 9 mit einer nach hinten verstellten Rückenlehne. Es ist deutlich zu erkennen, dass der Quersteg 127 nicht mehr in die Aufnahme 125, sondern nunmehr in die Aufnahme 126 eingesetzt ist.

## Patentansprüche

1. Sitzanordnung für den Transport von Personen, insbesondere von Kindern, Kleinkindern und Babys, in einer Fahrgastzelle (82) eines Fahrzeugs, insbesondere eines Fahrradanhängers oder eines Lastenfahrrads mit einem Ladebereich, in der mindestens ein Befestigungselement zum Befestigen der Sitzanordnung vorgesehen ist, mit einer ersten Stützfläche (13, 99, 116), insbesondere einer Rückenlehne, und einer dazu in einem Winkel angeordneten zweiten Stützfläche (14, 96, 117), insbesondere einer Sitzfläche, deren Winkel zueinander einstellbar ist, **gekennzeichnet durch** ein Zugsystem zum Einstellen des Winkels zwischen der ersten und der zweiten Stützfläche (13, 14, 96, 99, 116, 117) mit mindestens einem an der ersten Stützfläche (13, 99, 116) befestigten flexiblen Zugelement, insbesondere einem Seil (25, 61, 102, 121), mit dem die erste Stützfläche (13, 99, 116) nach vorn bzw. oben und nach unten bzw. hinten gezogen und in mindestens zwei Positionen gehalten werden kann.

2. Sitzanordnung nach Anspruch 1, **dadurch gekennzeichnet, dass** das mindestens eine Zugelement an mindestens einem Führungselement (18, 27, 93, 104, 122) vor bzw. über der ersten Stützfläche (13, 99, 116) und/oder an mindestens einem Führungselement hinter bzw. unter der ersten Stützfläche (13, 99, 116) geführt ist.

3. Sitzanordnung nach Anspruch 2, **gekennzeichnet durch** eine Kurvenführung (122) als Führungselement, durch die das Zugelement im Bereich eines Befestigungspunktes, an dem es an der ersten Stützfläche befestigt ist, auf einer Kurve geführt ist, die der Bewegungskurve des Befestigungspunktes beim Einstellen des Winkels zwischen der ersten und der zweiten Stützfläche entspricht, wobei vorzugsweise Mittel zum Festsetzen des Zugelements an der Kurvenführung in mindestens zwei Positionen vorgesehen sind.

4. Sitzanordnung nach einem der vorstehenden Ansprüche, **dadurch gekennzeichnet, dass** das Zugelement endlos ist oder seine Enden miteinander verbunden sind.

5. Sitzanordnung nach Anspruch 2 oder einem der darauf rückbezogenen Ansprüche 3 oder 4, **gekennzeichnet durch** Mittel zum Arretieren des mindestens einen Zugelements an mindestens einem der Führungselemente.

6. Sitzanordnung nach Anspruch 5, **gekennzeichnet durch** mindestens ein Klemmmittel, insbesondere eine Clamcleat, zum Arretieren des mindestens einen Seils (25, 61, 102, 121) in einer Position.

7. Sitzanordnung nach Anspruch 5 oder 6, **gekennzeichnet durch** einen zweiseitigen Steckverschluss, mit dem das Zugelement in zwei Positionen arretierbar ist.

8. Sitzanordnung nach einem der vorstehenden Ansprüche, **gekennzeichnet durch** einen in entgegengesetzte Richtungen drehbaren Drehgriff, in dem ein Abschnitt des flexiblen Zugelement derart aufgenommen ist, dass beim Drehen des Drehgriffs in eine Richtung ein auf den Drehgriff zulaufender Teil des Zugelements aufgewickelt und ein vom Drehgriff abgehender Teil des Zugelements abgewickelt wird, wobei der Drehgriff vorzugsweise in mindestens zwei Positionen, die zwei Winkelpositionen zwischen der ersten und der zweiten Stützfläche entsprechen, verrastbar ist.

9. Sitzanordnung nach einem der vorstehenden Ansprüche, **gekennzeichnet durch** jeweils mindestens ein Zugsystem an gegenüberliegenden Seiten mindestens einer der beiden Stützflächen (13, 14, 96, 99, 116, 117).

10. Sitzanordnung nach einem der vorstehenden Ansprüche, **gekennzeichnet durch** jeweils mindestens ein Seilzugsystem für die erste Stützfläche (13, 99, 116) und die zweite Stützfläche (14, 96, 117).

11. Sitzanordnung nach Anspruch 2 oder einem der darauf rückbezogenen Ansprüche, **dadurch gekennzeichnet, dass** das Führungselement vor der ersten Stützfläche an einem Träger, insbesondere an einem Gurt (16, 93, 115), ausgebildet ist, an dem mindestens die erste Stützfläche (13, 99), vorzugsweise beide Stützflächen (13, 14, 96, 99, 116, 117), zumindest teilweise aufgehängt sind.

12. Sitzanordnung nach Anspruch 11, **gekennzeichnet durch** eine oberhalb der ersten Stützfläche (13, 99, 116) quer zur Ausrichtung der Sitzanordnung verlaufende Strebe als Führungselement.

13. Sitzanordnung nach einem der vorstehenden Ansprüche, **dadurch gekennzeichnet, dass** mindestens eine flexible seitliche Wandung (15, 97, 101, 118) zwischen der ersten Stützfläche (13, 99, 116) und gegebenenfalls auch der zweiten Stützfläche (14, 96, 117) und dem Träger vorgesehen sind.

14. Anhänger für ein Fahrzeug, insbesondere ein Anhänger für ein Fahrrad oder ein Pedelec, mit einer Sitzanordnung nach einem der vorstehenden Ansprüche.

15. Lastenfahrrad mit einem Ladebereich und einer darin verankerten Sitzanordnung gemäß einem der Ansprüche 1 bis 13.
